# EUROPÄISCHE PATENTANMELDUNG

(11) **EP 3 792 427 A1**
(43) Veröffentlichungstag der Anmeldung: **17.03.2021**
(21) Anmeldenummer: 19197606.7
(22) Anmeldetag: 16.09.2019
(51) Int. Cl.: E04G 21/04, B66B 23/00, E04C 3/20, E04C 5/01, E04C 5/02, E04C 5/07, B28B 1/00, B28B 1/52, B33Y 10/00, B33Y 70/00, B29C 64/00

(54) **DRUCKERVORRICHTUNG ZUR ERSTELLUNG EINES BETONTRAGWERKES EINER PERSONENTRANSPORTANLAGE**

(71) Anmelder: Inventio AG, 6052 Hergiswil (CH)
(72) Erfinder: BOROS, Csaba, 929 01 Dunajska Streda (SK); WAGENLEITNER, Georg, 4575 Rossleithen (AT)

(57) **Zusammenfassung**

Die Erfindung betrifft eine Druckervorrichtung (1) und ein Verfahren zur Erstellung eines Betontragwerkes (3) einer als Fahrtreppe oder Fahrsteig ausgestalteten Personentransportanlage (5) in einem bestehenden Bauwerk (7). Die Druckervorrichtung (1) weist zumindest eine Druckerführungsvorrichtung (9), eine 3D-Betondruckereinrichtung (15), die entlang der Druckerführungsvorrichtung (9) bewegbar geführt angeordnet ist und eine Druckersteuerung (25) auf. Des Weiteren umfasst die Druckervorrichtung (1) zumindest eine Bewehrungszuführvorrichtung (31), mittels der während des Druckvorganges (77) Bewehrungsmaterial (33) zuführbar ist.

## Beschreibung

Die Erfindung betrifft eine Druckervorrichtung zur Erstellung eines Betontragwerkes einer als Fahrtreppe oder Fahrsteig ausgestalteten Personentransportanlage.

Personentransportanlagen, die als Fahrtreppen oder als Fahrsteige ausgestaltet sind, werden in Bauwerken des öffentlichen Bereichs wie beispielsweise in Bahnhöfen, U-Bahnhöfen, Flughäfen sowie in Shoppingmalls, Kulturzentren und dergleichen mehr, eingesetzt. Fahrtreppen oder Fahrsteige weisen eine tragende Struktur auf, die als Tragwerk bezeichnet wird. Meistens ist dieses Tragwerk eine Fachwerkkonstruktion, welche beim Hersteller als ganze Einheit oder in Tragwerkmodule unterteilt, hergestellt wird. Das Tragwerk oder dessen Tragwerkmodule beziehungsweise Fachwerkmodule werden in ein Bauwerk eingebaut, wobei das Tragwerk zum Beispiel zwei Etagen des Bauwerkes verbindet. In diesem Tragwerk sind die bewegbaren Komponenten der Fahrtreppe oder des Fahrsteiges angeordnet, beispielsweise ein Stufenband oder ein Palettenband, Umlenkachsen, eine Antriebswelle sowie der Antriebsmotor mit Getriebe, dessen Steuerung, Überwachungssysteme, Sicherheitssysteme und dergleichen mehr. Ferner werden auch feststehende Komponenten wie beispielsweise Balustraden, Kammplatten, Lagerstellen, Laufbahnen und Führungsschienen mit dem Tragwerk fest verbunden. Wenn das Tragwerk in Tragwerkmodule unterteilt wird, bedeutet jede dadurch gebildete Trennstelle einen erheblichen Mehraufwand an Material, Fertigungszeit und Montagezeit. Deshalb werden möglichst Trennstellen vermieden oder deren Anzahl möglichst klein gehalten, was dazu führt, dass dieses Bauteil mit seinen sehr grossen Dimensionen vom Herstellungsort zum Einsatzort befördert wird. Dadurch entsteht ein grosses Transportvolumen, welches vergleichsweise hohe Transportkosten verursacht.

Fahrtreppen und Fahrsteige der vorgenannten Art oder deren Module sind deshalb grosse sperrige Teile, die aufgrund ihrer Struktur nicht beliebig zerlegt in ein Bauwerk eingebracht werden können. Wie vorangehend erwähnt, nimmt das Tragwerk sämtliche Bauteile der Fahrtreppe auf und stützt diese an zwei gegeneinander gerichteten Auflagerstellen im Bauwerk ab. Mit anderen Worten bedeutet dies, dass das Tragwerk sich über die gesamte geplante Länge der Personentransportanlage erstreckt.

Bei neu zu erstellenden Bauwerken werden üblicherweise während des Bauvorganges die Fahrtreppen und Fahrsteige, sobald deren bauwerkseitig erstellten Auflagerstellen vorhanden sind, eingesetzt und dann umschliessende Wände und Decken höherer Etagen weitergebaut. Dies deshalb, weil diese Personentransportanlagen aus den vorgenannten Gründen als sehr grosse Bauteile ins Bauwerk eingebaut werden und so gross sind, dass sie nur mit Schwierigkeit durch vorhandene Öffnungen ins Gebäude eingebracht werden könnten.

Bei bestehenden Gebäuden jedoch fehlt diese Möglichkeit, eine grosse Fahrtreppe oder einen grossen Fahrsteig in das Gebäude einzubringen, ohne an der Gebäudehülle, beispielsweise an Wänden, Teile auszubrechen und Öffnungen zu schaffen, um die grossen Bauteile einzuführen. Auch bei U-Bahnstationen kann dieses Problem vorhanden sein, weil dort Tunnel in den Untergrund geschlagen werden und in diesen Tunneln die Fahrtreppen und Fahrsteige installiert werden müssen.

Ein weiteres Problem besteht darin, solche Personentransportanlagen, die im Herstellerwerk komplett zusammengebaut und als Ganzes geliefert werden, zu transportieren. Hierbei müssen grosse Lastwagen eingesetzt werden, wobei das grosse Volumen dieser Anlagen dazu führen kann, dass während des Transportes auch Verkehrswege gesperrt und bestimmte Verkehrsbehinderungen in Kauf genommen werden müssen.

Um die vorangehend aufgeführten Probleme zu vermeiden, werden oft Personentransportanlagen der vorgenannten Art in zerlegtem Zustand in das Bauwerk eingeführt und dort erst zusammengesetzt. Allerdings besteht hier das Problem, dass das üblicherweise als Fachwerk ausgeführte Tragwerk, welches der grösste Teil einer Fahrtreppe oder eines Fahrsteiges darstellt, nicht beliebig zerlegt werden kann. Auch wenn das Tragwerk in zwei oder drei Sektionen zerlegt angeliefert und ins Gebäude verbracht wird, ist es dennoch möglich, dass gewisse Teile des Bauwerkes ausgebrochen werden müssen. Zudem stellt jede Schnittstelle des Tragwerks, an dem die Sektionen zusammengebaut werden, einen erheblichen Mehraufwand dar, da diese besonders verstärkt werden muss, damit die Schnittstelle dieselbe Tragfähigkeit aufweist wie die anderen Teile des Tragwerks.

Aufgrund dieser Probleme kann die Aufgabe der vorliegenden Erfindung darin gesehen werden, Möglichkeiten zu schaffen, ein Tragwerk in ein bestehendes Gebäude oder Bauwerk einzubringen, ohne dass Teile des Gebäudes ausgebrochen werden müssen oder dass das Tragwerk in Sektionen unterteilt ins Gebäude eingebracht werden muss.

Diese Aufgabe wird gelöst durch eine Druckervorrichtung zur Erstellung eines Betontragwerkes einer als Fahrtreppe oder Fahrsteig ausgestalteten Personentransportanlage in einem bestehenden Bauwerk. Hierzu weist die Druckervorrichtung zumindest die nachfolgend aufgeführten Komponenten auf.

Zur Druckervorrichtung gehört eine Druckerführungsvorrichtung, die zwischen zwei zur Abstützung der Personentransportanlage vorgesehenen Auflagerstellen des Bauwerkes angeordnet werden kann. Hierbei ist die Druckerführungsvorrichtung dazu ausgebildet, zumindest während des Druckvorganges an den mit der Personentransportanlage zu verbindenden Etagen des Bauwerkes abzustützen. Mit anderen Worten stützt die Druckerführungsvorrichtung zumindest während der Durchführung des Druckvorganges auf die mit dem Betontragwerk zu verbindenden Etagen des Bauwerkes ab. Vorzugsweise wird dabei die Druckerführungsvorrichtung im Bereich der Auflagerstellen am Bauwerk abgestützt, so dass die beiden Auflagerstellen gewissermassen durch die Druckerführungsvorrichtung überbrückt werden. Dadurch dass die Druckerführungsvorrichtung an den zur Verbindung vorgesehenen Etagen abstützt, kann diese ohne riesigen Aufwand direkt auf die Auflagerstellen ausgerichtet werden, was zu einer hohen Fertigungspräzision des zu erstellenden Betontragwerkes führt.

Des Weiteren umfasst die Druckervorrichtung eine 3D-Betondruckereinrichtung, die entlang der Druckerführungsvorrichtung bewegbar geführt an dieser angeordnet werden kann. Die 3D-Betondruckereinrichtung ist dazu ausgestaltet, verarbeitbaren Beton räumlich anzuordnen. Hierzu weist die 3D-Betondruckereinrichtung zumindest eine Druckerdüse, eine Bewegungsvorrichtung zum Bewegen der Druckerdüse sowie eine Druckersteuerung auf. Durch die Druckersteuerung kann die Bewegungsvorrichtung, die Betonzufuhr durch die Druckerdüse sowie die Bewegungen der ganzen 3D-Betondruckereinrichtung entlang der Druckerführungsvorrichtung gesteuert werden. Zur Steuerung dient eine Steuerungssoftware, die zur Durchführung des Druckvorganges während der Erstellung des Betontragwerkes auf der Druckersteuerung ausgeführt werden kann. Ferner verfügt die Druckervorrichtung über eine Bewehrungszuführvorrichtung, mittels der während des Druckvorganges Bewehrungsmaterial zugeführt werden kann.

In einer Ausführung der Erfindung ist die Bewehrungszuführvorrichtung durch die Druckersteuerung ansteuerbar. Dabei werden während des Druckvorganges als Bewehrungsmaterial dienende Bewehrungsdrähte einem in der Steuerungssoftware gespeicherten Bewehrungsplan folgend, durch die Bewehrungszuführvorrichtung dem verarbeitbaren oder bereits verarbeiteten, aber noch nicht abgebundenen Beton, zugeführt. Dies stellt sicher, dass genau, wie im Bewehrungsplan vorgesehen, die Bewehrungsdrähte im Betontragwerk eingebaut werden und hierzu die nötige Festigkeit des Betontragwerkes gemäss den Berechnungen eingehalten werden.

In einer weiteren Ausführung der Erfindung können anstelle von Bewehrungsdrähten oder in Kombination mit Bewehrungsdrähten als Bewehrungsmaterial dienende Bewehrungsfasern einem in der Steuerungssoftware gespeicherten Bewehrungsplan folgend, während des Druckvorganges durch die Bewehrungszuführvorrichtung zugeführt werden. Bewehrungsfasern haben hierbei den Vorteil, dass sie wesentlich einfacher in den Beton eingebracht werden können und hierbei auch nicht der Druckerdüse im Wege stehen. Zudem lassen sich wesentlich freiere Formen gestalten, was durchaus den Wünschen der Architekten entgegenkommt.

Bewehrungsfasern der vorgenannten Art können beispielsweise Fasern aus Metall sein, aber auch Kunststoff- oder Glasfasern können eingesetzt werden. In einer weiteren Ausgestaltung der vorliegenden Erfindung, kann die Bewehrungszuführvorrichtung dazu ausgestaltet sein, unter Verwendung des Bewehrungsplanes die Länge und Form der Bewehrungsfaser auf den vorgesehenen Einbringungsort abgestimmt, zu fertigen. Dies hat den Vorteil, dass die Bewehrungsfasern nicht zuerst sortiert werden müssen oder nur eine Form von Bewehrungsfasern verwendet werden kann, sondern dass die Bewehrungsfasern einsatzgerecht gefertigt werden.

In einer weiteren Ausgestaltung der vorliegenden Erfindung kann die Bewehrungszuführvorrichtung dazu ausgestaltet sein, die Bewehrungsdrähte und/oder Bewehrungsfasern über die Druckerdüse in die aus der Druckerdüse austretende Betonmasse einzubringen. Dadurch werden die Bewehrungsdrähte oder Bewehrungsfasern hinreichend mit Betonmasse benetzt und sauber eingebettet.

In einer weiteren Ausführung der Erfindung kann die Bewehrungszuführvorrichtung eine Schiessvorrichtung aufweisen, die dazu ausgestaltet ist, die Bewehrungsdrähte und/oder Bewehrungsfasern entsprechend dem Bewehrungsplan, gezielt in die frisch aus der Druckerdüse austretende Betonmasse einzuschiessen. Diese Schiessvorrichtung kann beispielsweise ein mechanisches Abschussgerät oder ein mit Pressluft betriebenes Abschussgerät aufweisen. Durch die Schiessvorrichtung können seriell einzelne Bewehrungsfasern oder Bündel von Bewehrungsfasern abgeschossen und zielgerecht in die Betonmasse eingebracht werden.

Mittels der vorangehend beschriebenen Druckervorrichtung kann ein Betontragwerk einer als Fahrtreppe oder als Fahrsteig ausgestalteten Personentransportanlage in einem Bauwerk gedruckt werden. Hierzu wird die Druckervorrichtung in einem bestehenden Bauwerk eingebracht und damit ein Betontragwerk in dreidimensionalem Betondrucken erstellt. Zuerst kann zwischen zwei zur Abstützung der Personentransportanlage vorgesehenen Auflagerstellen des Bauwerkes die Druckerführungsvorrichtung der Druckervorrichtung angeordnet werden. Dann wird mit dieser Druckerführungsvorrichtung die 3D-Betondruckereinrichtung zwischen den beiden Auflagerstellen der Druckerführungsvorrichtung entlang verschiebbar geführt angeordnet. Anschliessend kann mit dieser Druckervorrichtung durch einen Druckvorgang ein Betontragwerk erstellt werden. Dieses Betontragwerk erstreckt sich nach dessen Fertigstellung zwischen den beiden Auflagerstellen des Bauwerkes. Während des Druckvorganges wird mit der Bewehrungszuführvorrichtung der Druckervorrichtung Bewehrungsmaterial in den frisch durch die Düse eingebrachten Beton zugeführt.

Dieses Bewehrungsmaterial können beispielsweise Bewehrungsdrähte sein, die einem Bewehrungsplan folgend durch die Bewehrungszuführvorrichtung zugeführt werden. Das von der Bewehrungszuführvorrichtung zugeführte Bewehrungsmaterial können aber auch Bewehrungsfasern sein, die beispielsweise aus Metall, aus Glasfasern oder aus Aramidfasern gefertigt sind. Die Bewehrungsfasern können durch die Bewehrungszuführvorrichtung als Halbzeug-Material während des Druckvorganges gefertigt werden. Mit anderen Worten können beispielsweise Metalldrähte auf einer Rolle vorhanden sein, welche durch die Bewehrungszuführvorrichtung gebogen und auf Länge geschnitten werden. Hierbei kann die Länge und Form der Bewehrungsfaser auf den vorgesehenen Einbringungsort im Betontragwerk abgestimmt, durch die Bewehrungszuführvorrichtung gefertigt werden.

In einer Ausgestaltung der Erfindung können die Bewehrungsdrähte und/oder Bewehrungsfasern über die Druckerdüse in die aus der Druckerdüse austretende Betonmasse eingebracht werden. Mit anderen Worten werden die Bewehrungsdrähte und/oder Bewehrungsfasern durch die Druckerdüse an den vorgesehenen Ort innerhalb des Betontragwerkes verbracht.

Die Bewehrungsdrähte und/oder Bewehrungsfasern können aber auch mittels einer Schiessvorrichtung der Bewehrungszuführvorrichtung gezielt in die frisch aus der Druckerdüse ausgetretene Betonmasse eingeschossen werden. Die Schiessvorrichtung lässt eine noch präzisere Einbringung der Bewehrungsdrähte oder Bewehrungsfasern in die Betonmasse zu.

Durch den Druckvorgang und gegebenenfalls unter Einbezug von Lagerbauteilen kann an einer der beiden Auflagerstellen ein Schwenklager und an der anderen Auflagerstelle ein Gleitlager während des Druckvorganges zwischen dem Betontragwerk und der jeweiligen Auflagerstelle ausgebildet werden. Vorzugsweise haben die Lagerbauteile Anschlussstellen für Bewehrungsmaterial. Mittels der Bewehrungszuführvorrichtung kann das von ihr zugeführte Bewehrungsmaterial mit den Anschlussstellen verbunden werden.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind. Es zeigen:
- Figur 1:: schematisch eine erfindungsgemässe Druckervorrichtung mit einer Druckerführungsvorrichtung, einer 3D-Betondruckeinrichtung und einer B ewehrungszuführvorrichtung;
- Figur 2:: schematisch einen Abschnitt eines Betontragwerkes während des Druckvorganges mit einer Druckervorrichtung;
- Figur 3:: schematisch eine Druckerführungsvorrichtung mit damit verbindbarer 3D-Betondruckeinrichtung;
- Figur 4:: schematisch einen Abschnitt eines Betontragwerkes mit als Bewehrung dienenden Drähten, welche durch eine Bewehrungszuführvorrichtung der Druckervorrichtung entsprechend einem Bewehrungsplan in die Betonmasse eingebracht wurden;
- Figur 5:: schematisch eine mögliche Ausgestaltung einer Düse mit einer Bewehrungszuführvorrichtung, welche Bewehrungsdrähte durch die Düse zuführt;
- Figur 6:: schematisch eine Ergänzung der in der Figur 5 dargestellten Bewehrungszuführvorrichtung, so dass nicht nur in Längserstreckung des Betontragwerkes Bewehrungsdrähte zugeführt werden können, sondern auch diese in Längserstreckung in der verarbeiteten Betonmasse angelegten Bewehrungsdrähte mit weiteren Bewehrungsdrähten in Querrichtung miteinander verbinden kann.

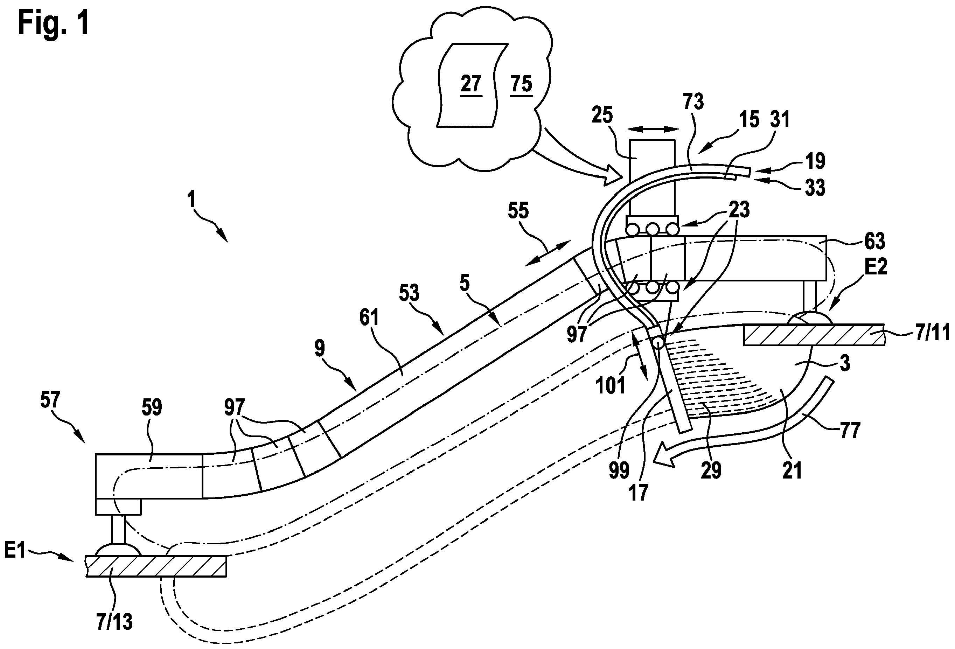

In der Figur 1 ist eine erfindungsgemässe Druckervorrichtung 1 mit einer Druckerführungsvorrichtung 9, einer 3D-Betondruckeinrichtung 15 und einer Bewehrungszuführvorrichtung 31 schematisch dargestellt. Des Weiteren zeigt die Figur 1 zwei auf unterschiedlichen Ebenen angeordnete Etagen E1, E2 eines Bauwerkes 7, welche durch eine Personentransportanlage 5 miteinander verbunden werden sollen. Diese Personentransportanlage 5 ist, weil sie noch nicht erstellt wurde, mittels strichpunktierter Linie dargestellt. Um diese Personentransportanlage 5 zu erstellen, muss zwischen diesen beiden Etagen E1, E2 eine tragende Konstruktion eingebracht werden. Als tragende Konstruktion ist ein Betontragwerk 3 vorgesehen.

Um dieses Betontragwerk 3 gegen die Schwerkraft im Bauwerk 7 abzustützen, sind zwei Auflagerstellen 11, 13 vorhanden, welche bauseitig auf den übereinander angeordneten Etagen E1, E2 des Bauwerkes 7 ausgebildet sind. Wie die Figur 1 zeigt, wird zur Erstellung des Betontragwerkes 3 der Personentransportanlage 5 die Druckerführungsvorrichtung 9 zwischen den beiden Etagen E1, E2 bzw. zwischen der Auflagerstelle 11 der oberen Etage E2 und der Auflagerstelle 13 der unteren Etage E1 angeordnet.

Die Druckerführungsvorrichtung 9 weist eine Tragkonstruktion 57 auf, an welcher zumindest eine Führungsbahn 53 ausgebildet ist. Die Form der Tragkonstruktion 57 in der dargestellten Seitenansicht der Figur 1, gibt annähernd den späteren Verlauf der Längserstreckung des Betontragwerkes 3 wieder. Die Tragkonstruktion 57 weist hierzu einen ersten Abschnitt 59, einen zweiten Abschnitt 61 und einen dritten Abschnitt 63 auf, die in ihrer Längserstreckung gerade ausgebildet sind und die mittels Winkelsegmenten 97 miteinander verbunden werden können. Je nach Anzahl verwendeter Winkelsegmente 97, können die seriell miteinander verbundenen Abschnitte 59, 61, 63 beziehungsweise deren nicht dargestellte Mittellängsachsen, winklig zueinander eingestellt werden. Mit anderen Worten sind durch die Anzahl verwendeter Winkelsegmente 97, verschiedene Steigungen des zweiten Abschnitts 61 einstellbar.

Wie bereits erwähnt, umfasst die Druckervorrichtung 1 auch eine 3D-Betondruckereinrichtung 15, welche an der Druckerführungsvorrichtung 9 entlang eines Führungsweges 55 verschiebbar geführt ist. Die 3D-Betondruckereinrichtung 15 kann hierbei mittels einer Bewegungsvorrichtung 23 entlang des Führungsweges 53 bewegt werden.

Die 3D-Betondruckereinrichtung 15 verfügt ferner über eine Druckerdüse 17. Die Druckerdüse 17 kann mit einer Betonfördereinrichtung 73 verbunden werden, durch welche Betonfördereinrichtung 73 verarbeitbarer Beton 19 der Druckerdüse 17 zugeführt werden kann. Von dieser Betonfördereinrichtung 73 ist nur der Schlauch dargestellt, welcher üblicherweise mit einem Transportgefährt, beispielsweise einem Lastwagen, verbunden ist, der den frischen Beton an die Baustelle transportiert hat. Auch die Druckerdüse 17 wird mittels der Bewegungsvorrichtung 23 beweglich am Rest der 3D-Betondruckereinrichtung 15 geführt, symbolisch dargestellt durch den Doppelpfeil 101 und den Schwenkmechanismus 99.

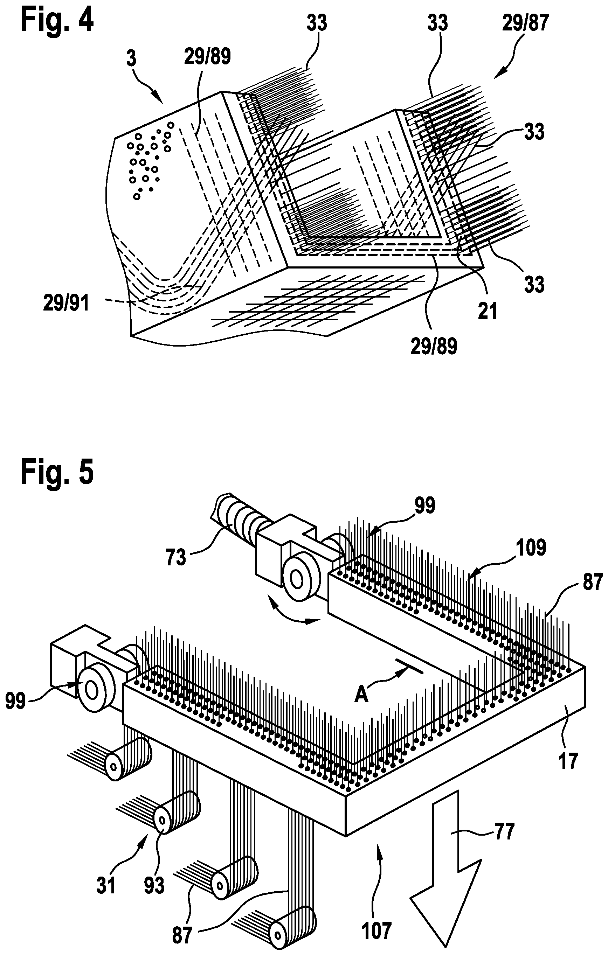

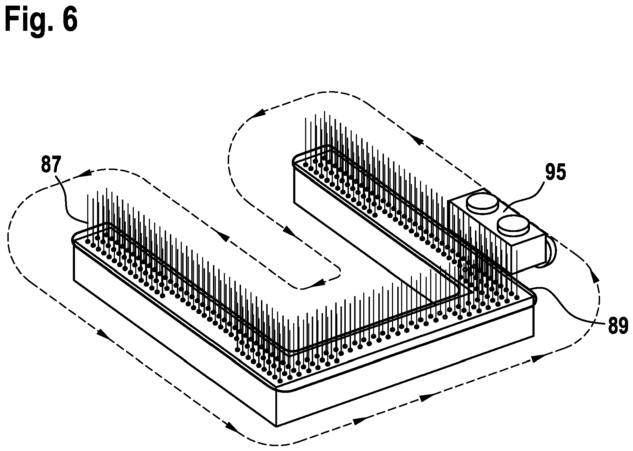

Mit der Druckerdüse 17 ist zudem die Bewehrungszuführvorrichtung 31 verbunden, so dass dieser Bewehrungsteile 33 zugeführt werden können. Die dargestellte Druckerdüse 17 wird weiter unten im Zusammenhang mit den Figuren 5 und 6 noch detaillierter beschrieben.

Zur Koordinierung der für den Druckvorgang erforderlichen Bewegungen der Bewegungsvorrichtung 23, weist die Druckervorrichtung 1 eine Druckersteuerung 25 auf. Die Druckersteuerung 25 führt dabei Steuerbefehle aus, welche in einer Steuerungssoftware 27 implementiert sind. Diese Steuerungssoftware 27 kann beispielsweise aus einer Datenwolke (Cloud) 75 heruntergeladen werden. Die Steuerungssoftware 27 enthält hierbei sämtliche Bewegungsabläufe sowohl der 3D-Druckervorrichtung 15 relativ zur Druckerführungsvorrichtung 9 als auch der Druckerdüse 17 relativ zum Rest der 3D-Druckervorrichtung 15. Ferner steuert die Druckersteuerung 25 gemäss der Steuerungssoftware 27 die Zufuhr von verarbeitbarem Beton 19 und von Bewehrungsmaterial 33 zur Druckerdüse 17.

Wie in der Figur 1 dargestellt, ist die Druckervorrichtung 1 mitten im Verfahren zur Erstellung des Betontragwerkes 3. Hierbei ist der bereits erstellte Teil des Betontragwerkes 3 mit ausgezogener Linie dargestellt, während der noch nicht erstellte Teil des Betontragwerkes 3 mit unterbrochener Linie dargestellt ist. Der bereits erstellte Teil des Betontragwerkes 3 zeigt den bereits verarbeiteten Beton 21 sowie die andeutungsweise dargestellte, bereits verbaute Bewehrung 29, welche gemäss dem bereits erfolgten Druckvorgang 77 eingebracht wurde.

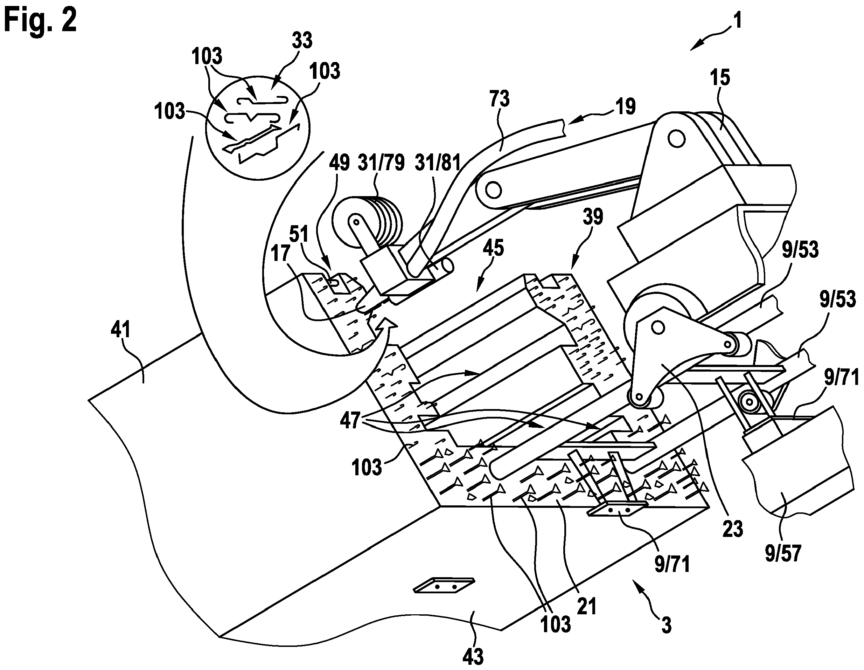

Die Figur 2 zeigt eine alternative Ausgestaltung der Druckervorrichtung 1. Deren Druckerführungsvorrichtung 9 weist eine Tragkonstruktion 57 sowie zwei Führungsbahnen 53 auf, welche über Verbindungsstellen 71 mit der Tragkonstruktion 57 verbunden sind.

An den Führungsbahnen 53 ist durch eine Bewegungsvorrichtung eine 3D-Betondruckereinrichtung 15 entlang den Führungsbahnen beweglich geführt angeordnet. Die 3D-Betondruckereinrichtung 15 ist ein umgebauter Industrieroboter, welcher mit weiteren Teilen versehen ist. Diese weiteren Teile sind eine Druckerdüse 17 sowie eine Bewehrungszuführvorrichtung 31. Die Druckerdüse 17 ist wiederum mit einer Betonfördereinrichtung 73 verbunden.

Anders als im vorangehenden Beispiel der Figur 1, wird im Beispiel der Figur 2 das Bewehrungsmaterial 33 nicht in Form von Bewehrungsdrähten, sondern in Form von Bewehrungsfasern 103 in den verarbeitbaren Beton19 eingebracht. Das Bewehrungsmaterial 33 in Form von Bewehrungsfasern 103 wird in der Bewehrungszuführvorrichtung 31 aus Halbzeug-Material 79 fortlaufend gefertigt. Im vorliegenden Ausführungsbeispiel liegt das Halbzeug-Material 79 als Draht aufgewickelt auf einer Drahtrolle vor, welches durch die Bewehrungszuführvorrichtung 31 in geeignete Länge und geeignete Form gebracht wird. Wie dargestellt, können die Bewehrungsfasern 103 verschiedene Formen annehmen. Dies hat den Vorteil, dass je nach Einsatzort die Form und Länge der Bewehrungsfasern 103 variiert werden kann. Nach dem Ablängungs- und Verformungsprozess des Bewehrungsmaterials 33 wird dieses einer Schiessvorrichtung 81 der Bewehrungszuführvorrichtung 31 zugeführt und diese am richtigen Ort und mit der richtigen Schussenergie in den noch weichen, von der Düse aufgetragenen beziehungsweise verarbeiteten Beton 21, eingebracht. Sowohl die Bewegungsvorrichtung 23 als auch die 3D-Druckervorrichtung 15 und die Bewehrungszuführvorrichtung 31 werden wiederum durch eine nicht dargestellte Druckersteuerung sowie die zugehörende Steuerungssoftware gesteuert.

Der bereits durch die Druckervorrichtung 1 erzeugte Teil des Betontragwerkes 3 weist einen U-förmigen Querschnitt 45 auf. Dieser wird gebildet durch zwei Seitenwände 41, 39, die durch einen Boden 43 miteinander verbunden sind. Wie deutlich ersichtlich ist, werden die beiden Führungsbahnen 53 der Druckerführungsvorrichtung 9 durch den Druckvorgang mit eingeschlossen. Nach der kompletten Erstellung des Betontragwerkes 3, kann der Rest der Druckerführungsvorrichtung 9, nämlich die Tragkonstruktion 57, durch die Trennung der Verbindungsstellen 71 vom Betontragwerk 3 gelöst werden. Somit ist ein Teil der Druckerführungsvorrichtung 9 Teil des Bewehrungsmaterials 33 des fertig erstellten Betontragwerkes 3.

Ein besonderer Vorteil des Druckens des Betontragwerkes 3 besteht darin, dass vorteilhafte Ausgestaltungen des Betontragwerkes 3 gleich mitgedruckt werden können. Einerseits können dies freie Aussenformen des Bodens 43 und der Seitenwände 39, 41 sein, die nach den Wünschen des Architekten frei formbar sind. Zum anderen können wie im vorliegenden Ausführungsbeispiel der Figur 2 dargestellt, durch den Druckvorgang funktionsrelevante Konturen wie beispielsweise die dargestellten Führungselemente 74 mitgedruckt werden. Diese Führungselemente 47 dienen als Führungsschienen für das innerhalb des Betontragwerkes 3 beweglich anzuordnende Stufenband oder Palettenband (nicht dargestellt) der Personentransportanlage 5. Ferner können auch Aufnahmen 49 mitgedruckt werden. In diese Aufnahmen 49 können Befestigungselemente 51 eingelassen sein, an welchen weitere Bauteile der Personentransportanlage 3 befestigt werden können.

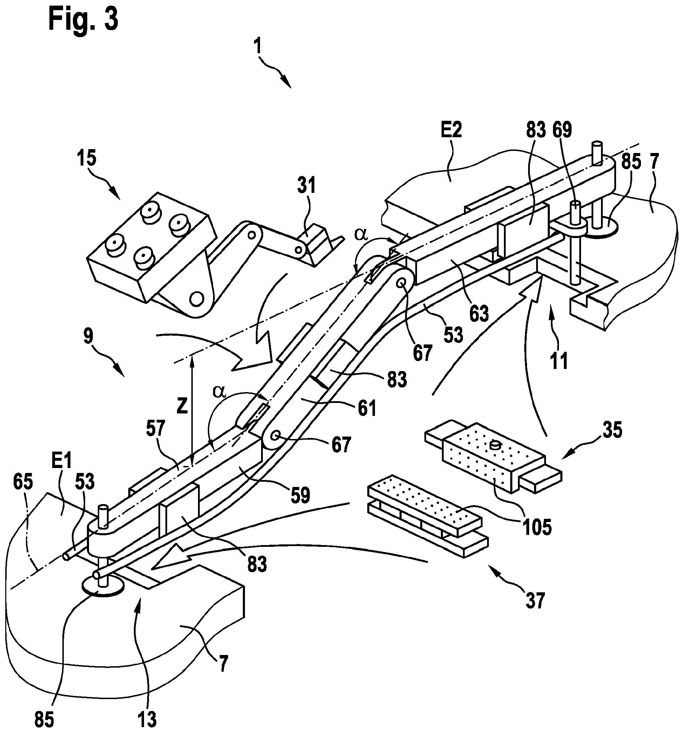

Die Figur 3 zeigt eine weitere mögliche Ausgestaltung der Druckervorrichtung 1. Wiederum sind zwei Etagen E1, E2 des Bauwerkes 7 dargestellt. An jeder dieser Etagen E1, E2 ist eine Auflagerstelle 11, 13 ausgebildet. Zwischen den beiden Auflagerstellen 13, 11 ist eine Druckerführungsvorrichtung 9 der Druckervorrichtung 1 angeordnet. Die Druckerführungsvorrichtung 9 dient zur Führung einer 3D-Betondruckereinrichtung 15, die Teil der Druckervorrichtung 1 ist und bereits ausführlich im Zusammenhang mit der Figur 2 beschrieben wurde. Im Unterschied zur Druckervorrichtung 1 der Figur 2, wird in der Figur 3 die 3D-Betondruckereinrichtung 15 nicht «stehend», sondern «hängend» an der Druckerführungsvorrichtung 9 geführt.

Die Druckerführungsvorrichtung 9 weist drei Abschnitte 59, 61, 63 auf. Der erste Abschnitt 59 weist eine Stütze 85 auf, welche auf der Etage E1 angeordnet ist. Der dritte Abschnitt 63 weist ebenso eine Stütze 85 auf, die auf der zweiten Etage E2 des Bauwerkes 7 abgestützt ist. Der erste Abschnitt 59 und der dritte Abschnitt 63 sind mittels des zweiten Abschnitts 61 miteinander über Gelenkstellen 67 verbunden. Dadurch lässt sich der Niveauunterschied zwischen der Etage E1 und der Etage E2 an der Druckerführungsvorrichtung 9 einstellen, wie dies mit dem Höhenmass Z symbolisch dargestellt ist. Wie mittels der Mittellängsachse der Druckerführungsvorrichtung 9 gezeigt wird, ermöglichen die Gelenkstellen 67 eine winklige Einstellung α des zweiten Abschnitts 61 zum dritten Abschnitt 63 und zum ersten Abschnitt 59. Diese durch die Abschnitte 59, 61, 63 und die Gelenkstellen 67 gebildete Tragkonstruktion der Druckerführungsvorrichtung 9 stützt die beiden Führungsbahnen 53, welche mittels Justierträger 83 einstellbar an der Tragkonstruktion 57 befestigt sind.

Des Weiteren weist die Druckerführungsvorrichtung 9 eine Aufnahmevorrichtung 69 auf.

Diese Aufnahmevorrichtung 69 dient der temporären Aufnahme von Lagerbauteilen 35, 37. Hierbei ist das Lagerbauteil 35 ein Schwenklager, und das Lagerbauteil 37 ein Gleitlager. Durch das Verbauen der beiden Lagerbauteile 35, 37 kann sich nach der Fertigstellung das Betontragwerk 3 (nicht dargestellt), relativ zu den beiden Etagen E1, E2 bewegen. Um eine gute Verankerung der Lagerbauteile 35, 37 zu erreichen, weisen diese Löcher auf, welche als Anschlussstellen 105 zu Bewehrungsteilen 33 dienen, die von der Bewehrungszuführvorrichtung 31 zugeführt und in diese Anschlussstellen 105 eingeführt werden können.

Wie die Figur 3 unschwer erkennen lässt, ist eine Druckerführungsvorrichtung 9 dargestellt, welche vor dem Druckvorgang aufgebaut wird und dann nach Erstellung des Betontragwerkes 3 komplett demontiert werden kann. Somit verbleibt kein Teil der Druckerführungsvorrichtung 9 als Teil einer Bewehrung im erstellten Betontragwerk 3 zurück.

Die Figur 4 zeigt einen Abschnitt eines Betontragwerkes 3, anhand dessen die Einbringung von Bewehrungsteilen 33 besser erklärt werden soll. Die im verarbeiteten Beton 21 eingelassene, verbaute Bewehrung 29 sind verschieden geführte Bewehrungsdrähte 87, 89, 91. Zum einen verlaufen die Bewehrungsdrähte 87 parallel zur Längserstreckung des Betontragwerkes 3. In orthogonaler Richtung zu diesen Bewehrungsdrähten 87, sind weitere Bewehrungsdrähte 89 im Betontragwerk 3 angeordnet, welche die längsverlaufenden Bewehrungsdrähte 87 miteinander verbinden. Um Scherbeanspruchungen besser aufnehmen zu können, werden zudem während des Druckvorganges diagonal verlaufende Bewehrungsdrähte 91 in das Betontragwerk 3 eingebracht.

Um das in der Figur 4 dargestellte Betontragwerk 3 zu erzeugen, kann die in der Figur 1 dargestellte 3D-Betondruckereinrichtung 15 eine Druckerdüse 17 aufweisen, wie sie in der Figur 5 schematisch dargestellt ist. Die Druckerdüse 17 der Figur 5 ist U-förmig aufgebaut, wodurch der U-förmige Querschnitt des Betontragwerkes 3 erzeugt wird. An der U-förmig ausgebildeten Druckerdüse 17 schliesst ein Schlauch der Betonfördereinrichtung 73 an, durch den verarbeitbaren Beton der Druckerdüse 17 zugeführt werden kann. Die Druckerdüse 17 ist hierbei schwenkbar durch zwei Schwenklager 99 gelagert, so dass sie dem durch die Steuerungssoftware 27 (siehe Figur 1) vorgegebenen Druckvorgang 77 folgend, verschwenkt werden kann.

Wie in der Figur 4 beispielhaft dargestellt ist, werden durch die Druckerdüse 17 die Bewehrungsdrähte 87 zugeführt, welche parallel zur Längserstreckung im Betontragwerk 3 verbaut werden sollen. Diese Bewehrungsdrähte 87 werden mittels Drahtführungen 93 der ansonsten nicht dargestellten Bewehrungszuführvorrichtung 31 zugeführt. Hierbei durchragen die Bewehrungsdrähte 87 die Druckerdüse 17 an ihrer Vorderseite 107 und treten zusammen mit der von der Betonfördereinrichtung 73 zugeführten verarbeitbaren Betonmasse an der Rückseite 109 der Druckerdüse 17 aus dieser heraus und bilden dem Druckvorgang 77 folgend, das Betontragwerk 3. Aufgrund der U-förmigen Ausgestaltung der Druckerdüse 17 können während des Druckvorganges 77 kontinuierlich glattgestrichene Oberflächen am entstehenden Betontragwerk 3 erzeugt werden, so dass keine Nacharbeit der Oberflächen erforderlich ist. Allerdings schränkt eine solche Ausgestaltung der Druckerdüse 17 die Gestaltungsfreiheit der Oberflächen und insbesondere des Querschnittes des Betontragwerkes 3 ein.

Die Figur 6 zeigt schematisch eine mögliche Zuführeinheit 95 für Bewehrungsdrähte 89, die orthogonal zu den in Längsrichtung eingebrachten Bewehrungsdrähten 87 angeordnet werden sollen. Hierbei umläuft die Zuführeinheit 95 beispielsweise den U-förmigen Querschnitt periodisch und spult den Bewehrungsdraht 89 um die in Längsrichtung eingebrachten Bewehrungsdrähte 87.

Obwohl die Figuren 1 bis 6 unterschiedliche Aspekte der vorliegenden Erfindung anhand eines zu erstellenden Betontragwerkes 3 zeigen, welches vertikal voneinander beabstandete Etagen E1, E2 miteinander verbinden soll, ist es offensichtlich, dass die beschriebenen Verfahrensschritte und eine entsprechende Vorrichtung gleichermaßen auch für auf einer Ebene anzuordnende Betontragwerke Anwendung finden, wie sie beispielsweise für Fahrsteige verwendet werden. Zudem kann die Druckervorrichtung 1 weitere Funktionseinheiten wie beispielsweise eine Vorrichtung zum Glätten von Oberflächen aufweisen, mittels der der die Oberflächen des noch nicht abgebundenen, verarbeiteten Betons 21 des Betontragwerkes 3 bearbeitet werden können.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Druckervorrichtung (1) zur Erstellung eines Betontragwerkes (3) einer als Fahrtreppe oder Fahrsteig ausgestalteten Personentransportanlage (5) in einem bestehenden Bauwerk (7), **dadurch gekennzeichnet, dass** die Druckervorrichtung (1) zumindest die folgenden Komponenten aufweist:
• eine Druckerführungsvorrichtung (9), die zwischen zwei zur Abstützung der Personentransportanlage (5) vorgesehenen Auflagerstellen (11, 13) des Bauwerkes (7) angeordnet werden kann, wobei die Druckerführungsvorrichtung (9) dazu ausgebildet ist, zumindest während des Druckvorganges (77) an den mit der Personentransportanlage (5) zu verbindenden Etagen (E1, E2) des Bauwerkes (7) abzustützen;
• eine 3D-Betondruckereinrichtung (15), die entlang der Druckerführungsvorrichtung (9) bewegbar geführt an dieser angeordnet ist und dazu ausgestaltet ist, verarbeitbarer Beton (19) räumlich anzuordnen, wobei die 3D-Betondruckereinrichtung (15) zumindest eine Druckerdüse (17), eine Bewegungsvorrichtung (23) zum Bewegen der Druckerdüse (17) sowie eine Druckersteuerung (25) beinhaltet, durch welche Druckersteuerung (25) die Bewegungsvorrichtung (23), die Betonzufuhr durch die Druckerdüse (17) sowie die Bewegungen der ganzen 3D-Betondruckereinrichtung (15) entlang der Druckerführungsvorrichtung (9) steuerbar sind; und
• eine Steuerungssoftware (27), ausführbar auf der Druckersteuerung (25) zur Durchführung des Druckvorganges (77) während der Erstellung des Betontragwerkes (3); sowie
• eine Bewehrungszuführvorrichtung (31), mittels der während des Druckvorganges (77) Bewehrungsmaterial (33) zuführbar ist.

2. Druckervorrichtung (1) nach Anspruch 1, wobei die Bewehrungszuführvorrichtung (31) durch die Druckersteuerung (25) ansteuerbar ist und als Bewehrungsmaterial (33) dienende Bewehrungsdrähte (87, 89, 91) einem in der Steuerungssoftware (27) gespeicherten Bewehrungsplan folgend, während des Druckvorganges (77) durch die Bewehrungszuführvorrichtung (31) zuführbar sind.

3. Druckervorrichtung (1) nach Anspruch 1 oder 2, wobei die Bewehrungszuführvorrichtung (31) durch die Druckersteuerung (25) ansteuerbar ist und als Bewehrungsmaterial (33) dienende Bewehrungsfasern (103) einem in der Steuerungssoftware (27) gespeicherten Bewehrungsplan folgend, während des Druckvorganges (77) durch die Bewehrungszuführvorrichtung (31) zuführbar sind.

4. Druckervorrichtung (1) nach Anspruch 3, wobei die Bewehrungszuführvorrichtung (31) dazu ausgestaltet ist, die Bewehrungsfasern (103) aus Halbzeug-Material (79) während des Druckvorganges (77) zu fertigen.

5. Druckervorrichtung (1) nach Anspruch 3 oder 4, wobei die Bewehrungszuführvorrichtung (31) dazu ausgestaltet ist, unter Verwendung des Bewehrungsplanes die Länge und Form der Bewehrungsfaser (103) auf den vorgesehenen Einbringungsort abgestimmt, durch die Bewehrungszuführvorrichtung (31) zu fertigen.

6. Druckervorrichtung (1) nach einem der Ansprüche 1 bis 5, wobei die Bewehrungszuführvorrichtung (31) dazu ausgestaltet ist, die Bewehrungsdrähte (87, 89, 91) und/oder Bewehrungsfasern (103) über die Druckerdüse (17) in die aus der Druckerdüse (17) austretende Betonmasse einzubringen.

7. Druckervorrichtung (1) nach einem der Ansprüche 1 bis 5, wobei die Bewehrungszuführvorrichtung (31) eine Schiessvorrichtung (81) aufweist, die dazu ausgestaltet ist, die Bewehrungsdrähte (87, 89, 91) und/oder Bewehrungsfasern (103) entsprechend dem Bewehrungsplan, gezielt in die frisch aus der Druckerdüse (17) ausgetretene Betonmasse einzuschiessen.

8. Verfahren zur Erstellung eines Betontragwerkes (3) einer als Fahrtreppe oder Fahrsteig ausgestalteten Personentransportanlage (5), **dadurch gekennzeichnet, dass** in einem bestehenden Bauwerk (7) eine Druckervorrichtung (1) nach einem der Ansprüche 1 bis 7 zum dreidimensionalen Betondrucken eingebracht wird, indem:
zwischen zwei zur Abstützung der Personentransportanlage (5) vorgesehenen Auflagerstellen (11, 13) des Bauwerkes (7) die Druckerführungsvorrichtung (9) der Druckervorrichtung (1) angeordnet wird;
an dieser Druckerführungsvorrichtung (9) die 3D-Betondruckereinrichtung (15) angeordnet wird, die zwischen den beiden Auflagerstellen (11, 13) an der Druckerführungsvorrichtung (9) entlang verschiebbar geführt ist; und
mit dieser Druckervorrichtung (1) durch einen Druckvorgang (77) ein Betontragwerk (3) erstellt wird, welches sich zwischen den beiden Auflagerstellen (11, 13) erstreckt, wobei mittels der Bewehrungszuführvorrichtung (31) während des Druckvorganges (77) Bewehrungsmaterial (33) zugeführt wird.

9. Verfahren nach Anspruch 8, wobei das Bewehrungsmaterial (33) Bewehrungsdrähte (87, 89, 91) sind, die einem Bewehrungsplan folgend, durch die Bewehrungszuführvorrichtung (31) zugeführt werden.

10. Verfahren nach Anspruch 8 oder 9, wobei das Bewehrungsmaterial (33) Bewehrungsfasern (103) sind, die einem Bewehrungsplan folgend, durch die Bewehrungszuführvorrichtung (31) zugeführt werden.

11. Verfahren nach Anspruch 10, wobei die Bewehrungsfasern (103) durch die Bewehrungszuführvorrichtung (31) aus Halbzeug-Material (79) während des Druckvorganges (77) gefertigt werden.

12. Verfahren nach Anspruch 11, wobei die Länge und Form der Bewehrungsfaser (103) auf den vorgesehenen Einbringungsort abgestimmt, durch die Bewehrungszuführvorrichtung (31) gefertigt wird.

13. Verfahren nach einem der Ansprüche 9 bis 12, wobei die Bewehrungsdrähte (87, 89, 91) und/oder die Bewehrungsfasern (103) über die Druckerdüse (17) in die aus der Druckerdüse (17) austretende Betonmasse eingebracht werden.

14. Verfahren nach einem der Ansprüche 9 bis 12, wobei die Bewehrungsdrähte (87, 89, 91) und/oder die Bewehrungsfasern (103) mittels einer Schiessvorrichtung (81) der Bewehrungszuführvorrichtung (31) gezielt in die frisch aus der Druckerdüse (17) ausgetretene Betonmasse eingeschossen werden.

15. Verfahren nach einem der Ansprüche 8 bis 14, wobei durch den Druckvorgang (77) und gegebenenfalls unter Einbezug von Lagerbauteilen (35, 37), an einer der beiden Auflagerstellen (11, 13) ein Schwenklager (35) und an der anderen Auflagerstelle (11, 13) ein Gleitlager (37) während des Druckvorganges (77) zwischen dem Betontragwerk (3) und der jeweiligen Auflagerstelle (11, 13) ausgebildet werden und wobei die Lagerbauteile (35, 37) Anschlussstellen (105) für Bewehrungsmaterial (33) aufweisen und mittels der Bewehrungszuführvorrichtung (31) das von ihr zugeführte Bewehrungsmaterial (33) mit den Anschlussstellen (105) verbunden werden kann.
